# EUROPEAN PATENT APPLICATION

(11) **EP 4 797 677 A1**
(43) Date of publication of application: **26.08.2026**
(21) Application number: 26155782.1
(22) Date of filing: 02.02.2026
(51) Int. Cl.: H04N 7/14

(54) **METHOD, DEVICE, AND SYSTEM FOR DOA ESTIMATION WITH UNCERTAINTY QUANTIFICATION**

(30) Priority: 24.02.2025 EP 25159640
(71) Applicant: GN Hearing A/S, 2750 Ballerup (DK)
(72) Inventor: LAROCHE, Clément, DK-2750 Ballerup (DK)
(74) Representative: Aera A/S

(57) **Abstract**

A video conference system (1), device, and method are disclosed. The device comprises a memory (18), an interface (20), and one or more processors (16). The one or more processors comprise a first neural network (20) configured to operate according to a first machine learning model. The one or more processors are configured to obtain audio data (24). The one or more processors are configured to process, using the first neural network, the audio data for provision of a first model output comprising a direction of arrival estimation. The one or more processors are configured to obtain camera data (25). The one or more processors are configured to process the camera data for provision of a video output. The one or more processors are configured to determine an uncertainty parameter based on the first model output and control the processing of the camera data for provision of the video output based on the uncertainty parameter.

## Description

The present disclosure relates to a method, and related a device and system, for estimating direction of arrival (DOA) of communication signals using uncertainty quantification.

### BACKGROUND

Video conferencing is a type of communication or a meeting in which one or more people are connected electronically and participate in the meeting using audio and/or video technology rather than by participating exclusively in person. Video conferences may be conducted or joined by any combination of mobile or computing devices, purpose-built rooms or environments, assemblies of cameras, microphones, and/or displays. Whether a video conference is a useful alternative to in-person communication often depends on how accurately the participants are captured, both visibly and verbally. Framing of participants, the capture and presentation or depiction of participants within the video conference, affects the video conference quality and experience. Video conference systems that attempt to automatically frame participants may suffer from inaccuracies in inputs used to performing framing operations.

### SUMMARY

Accurate participant framing in video conferences may benefit from precise direction of arrival (DOA) estimation, such as estimating DOA of audio signals, which may be used to identify, highlight, and frame the current speaker in video. Some systems may suffer from poor framing due to inaccuracies in sound source localization caused by environmental noise, reverberation, and/or the presence of multiple speakers.

Accordingly, there is a need for methods, devices, and systems for video conferencing, which mitigate, alleviate or address the shortcomings existing and provide accurate direction of arrival estimates of signals.

A video conference device is provided. The device comprises a memory, an interface, and/or one or more processors. The one or more processors comprise a neural network, such as a first neural network configured to operate according to a first machine learning (ML) model. The one or more processors are configured to obtain audio data. The one or more processors are configured to process, e.g., using the first neural network, the audio data for provision of a first model output, e.g. from the first ML model, comprising a direction of arrival estimation. The one or more processors are configured to obtain camera data. The one or more processors are configured to process the camera data for provision of a video output. The one or more processors are configured to determine an uncertainty parameter, e.g., based on the first model output. The one or more processors are optionally configured to control the processing of the camera data for provision of the video output based on the uncertainty parameter.

Further, a video conference system is provided. The system comprises a camera, a plurality of microphones, a memory, an interface, and/or one or more processors. The one or more processors comprise a neural network, such as a first neural network configured to operate according to a first machine learning (ML) model. The one or more processors are configured to obtain audio data. The one or more processors are configured to process, e.g., using the first neural network, the audio data for provision of a first model output comprising a direction of arrival estimation. The one or more processors are configured to obtain camera data. The one or more processors are configured to process the camera data for provision of a video output. The one or more processors are configured to determine an uncertainty parameter, e.g., based on the first model output. The one or more processors are configured to control the processing of the camera data for provision of the video output, e.g., based on the uncertainty parameter.

A method of operating a video conference system or device is provided. The system or device comprises a memory, an interface, and/or one or more processors. The one or more processors comprise a neural network, such as a first neural network configured to operate according to a first machine learning (ML) model. The method comprises obtaining audio data. The method comprises processing, e.g., using the first neural network, such as the first ML model, the audio data for provision of a first model output comprising a direction of arrival estimation. The method comprises obtaining camera data. The method comprises processing the camera data for provision of a video output. The method comprises determining an uncertainty parameter, e.g., based on the first model output, such as the direction of arrival estimation. The method comprises controlling the processing of the camera data for provision of the video output based on the uncertainty parameter.

It is an advantage of the present disclosure that direction of arrival estimation in a video conferencing system may be sufficiently accurate to support managing aspects of the video conferencing system.

Further, it is an advantage of the present disclosure that an uncertainty quantification, such as an uncertainty parameter, may be used to for direction of arrival estimation and/or for managing aspects of a video conferencing system.

It is a further advantage of the present disclosure that direction of arrival estimation using uncertainty quantification, such as an uncertainty parameter, may be used to manage framing of participants in a video conference.

It is a further advantage of the present disclosure that devices may employ neural networks that may be trained to improve framing and thus video conferencing experience for a specific video conferencing system.

It is a further advantage of the present disclosure that active participants, such as those participants presently speaking, may be identified and framed as distinct from passive participants, such as those not presently speaking, and such identification and framing may be done without in support of methods that detect lip movement or other non-auditory processes.

Using audio signals to estimate the DOA can quickly identify the active participant, thereby improving the framing of participant(s) in video conferences.

### BRIEF DESCRIPTION OF THE DRAWINGS

The above and other features and advantages of the present disclosure will become readily apparent to those skilled in the art by the following detailed description of example embodiments thereof with reference to the attached drawings, in which:
Fig. 1 is a diagram illustrating an example video conference system comprising an example video conference device or devices according to this disclosure,
Figs. 2A and 2B are a flow-chart illustrating an example method, performed in an example video conference system and/or device according to this disclosure, and
Fig. 3 is a block diagram illustrating an example video conference device according to this disclosure.

### DETAILED DESCRIPTION

Various example embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the disclosure or as a limitation on the scope of the disclosure. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

In one or more examples, a video conference system or device is provided. The system or device may be a video conference device. The system or device may include a memory, an interface, e.g., an interface for a camera, a microphone, a display, and/or a network), and/or one or more processors. In one or more examples, the one or more processors comprise one or more neural networks, such as a first neural network configured to operate according to first a machine learning (ML) model. For example, the one or more processors may each comprise the first neural network and/or the one or more processors may collectively comprise the first neural network. The one or more processors may, additionally or alternatively, comprise a second neural network and/or other neural networks. The first neural network may be one of several neural networks the one or processors comprise. The first ML model may be one of several models the one or more processors are configured to operate according to. Thus, the one or more processors may comprise several neural networks each configured to operate according to one or several ML models. The first neural network as disclosed herein, may be seen as a direction of arrival, DoA, estimator and/or a DoA predictor (such as DoA estimator/predictor with uncertainty parameter output) configured to operate according to the first machine learning model. The one or more processors comprising a neural network, such as the first neural network, may be understood as the one or more processors comprising a dedicated module or unit configured to operate the neural network and the machine learning model as disclosed herein, such as configured to act as the DoA estimator and/or DoA predictor. For example, a neural network, such as the first neural network, may be stored on the memory of the video conference device and operated by a dedicated processor or part of the one or more processors.

As used herein, one or more processors comprising a first neural network may refer to a processor or processors reading data and/or other indication(s) of a neural network from the memory. The one or more processors may thus be general purpose processors that may execute instructions representative of a neural network. Thus, the one or more processors may be understood as comprising a neural network when, for example, a device that includes the one or more processors is powered off and coupled with a memory (e.g., a non-volatile storage device) that itself comprises (e.g., stores) data representative of a neural network (or several neural networks).

An ML model, as used herein, may be understood to be or to comprise an algorithm, such as a computational algorithm, that maps input data to desired outputs by identifying statistical patterns through an iterative process of training. The process of training an ML model may be referred to as learning. An ML model may include parameters, such as numerical values, e.g., numbers representing weights and biases. Such parameters may be adjusted during the training to minimize the difference between the model's predictions and the actual correct outputs. An ML model, such as the first ML model described herein, may have a specific configuration of interconnected computational units that define how input data is processed and transformed. Such an ML model may thus be understood as or to operate like neurons and may thus be referred to as a neural network, such as the first neural network described herein.

A neural network, such as the first neural network described herein, may thus be understood as layers of interconnected nodes where each connection has a weight that is adjusted during training. A graphic representation of such a network may look like a representation of a biological neural network. In one or more examples, an ML model learns by minimizing a loss function, which quantifies the difference between predicted and actual outcomes. This may include techniques like backpropagation, which may propagate error information backwards through the network and update parameters accordingly.

Application or use of neural networks and/or ML models differs from other programming or software implementations because the model may not follow pre-defined rules; rather, the ML model may have decision-making (e.g., inference) logic created from or based on the patterns present in training data.

Training an ML model (or neural network) may be understood as a process or procedure that systematically updates the ML model parameters. This may include mathematical and/or statistical analysis of errors between predicted and actual or desired results. An exemplary training algorithm may include gradient descent, which may incrementally adjust parameters and thereby reduce prediction errors.

As described herein, one or more processors, such as one or more processors of a video conference system or device, are configured to obtain audio data and process, using a neural network, such as the first neural network, the audio data for provision of a first model output (e.g., output of the first ML model) comprising a direction of arrival estimation. In other words, the first model output may comprise a direction parameter indicative of an estimated direction of arrival of audio.

The one or more processors may additionally obtain camera data. Camera data may be obtained, for example, based on the first model output. In other words, the camera data may be selected, identified, and/or obtained based on a determination and/or output of the first neural network. Camera data may be obtained, for example, from memory coupled with the one or more processors and/or camera data could be obtained from a camera, such as via an interface. In one or more examples, camera data is obtained from multiple sources, which could include memory, a camera or cameras, and/or other devices, such as computing devices, coupled with the one or more processors (or coupled with a device that comprises the one or more processors).

The one or more processors may process the camera data for provision of a video output. Processing the camera data may include processing with and/or without a neural network, such as the first neural network. For example, the processor may use the first neural network to process the camera data; for example, the camera data may be an additional input to the first neural network. In one or more examples, the camera processing is based on automatic camera framing and/or speaker tracking. The processor may employ a specific algorithm, such as part of a second neural network, which could be based on face detection or direction of arrival of one or more audio/sound signals, or both. Or the processor may apply another algorithm employing pre-defined rules for the processing the camera data.

Framing, as used herein, may be understood as the composition and/or positioning of participants within the view of a camera or cameras. As noted, framing may affect the quality of a video conference. Framing that appropriately or accurately captures participants in the video conference may create engaging and visually appealing video communication experience and thus a quality video conference. Poor framing may create a negative or poor video and thus a poor video conference. Framing may thus be an important consideration and thus an important aspect of persistent monitoring and adjustment within a video conference system. Framing may be modified or adjusted according to different camera settings or schemes.

The present disclosure may allow for identification and frame of active participants, such as participants currently speaking, as distinct from passive participants, such as those not presently speaking. Other systems may rely primarily or exclusively on motion, such as monitoring lip or other facial movement to identify active speakers. The use of audio data, for example, as described herein, may allow for more precise and/or faster, relative to other methods, framing by leveraging direction of arrival estimation.

The one or more processors may determine an uncertainty parameter based on the first model output. An uncertainty parameter may be understood as a quantitative measure of a neural network or ML model's, such as the first ML model's, confidence or variability in its predictions. Various aspects and techniques for uncertainty quantification are described herein. With heteroscedastic regression, for example, a model may apply a learned variance or standard deviation that accompanies each prediction.

Additionally or alternatively, the uncertainty parameter can be or include predictive variance, which may directly represent a spread of possible predictions. Predictive variance may be determined or computed as a parameter alongside the main prediction, and/or it may indicate an ML model's prediction of deviation from the true value.

Additionally or alternatively, the uncertainty parameter may include epistemic uncertainty, which may capture or reflect the model's lack of training or learning about the underlying data distribution. This may be estimated through techniques like dropout or ensemble methods, as discussed herein.

Additionally or alternatively, the uncertainty parameter may include aleatoric uncertainty, which may represent inherent noise or randomness in the data, such as audio data. This may reflect error that cannot be reduced with more data, such as by obtaining additional audio data, and may be used in scenarios with inherent measurement variability.

Additionally or alternatively, the uncertainty parameter, or estimation of such a parameter, may include or may employ one or several other techniques, including Bayesian neural networks, Monte Carlo dropout, deep ensembles, quantile regression, and/or evidential deep learning. In one or more examples, such tools and techniques may offer different approaches to estimating uncertainty and may be employed based on the specific needs and constraints of the application.

In one or more examples, the uncertainty parameter, or estimation of such a parameter, may include and/or may be determined by using several techniques, such as by combining uncertainty parameters each of which is determined using a different technique. Such an approach may yield accurate uncertainty prediction relative to, for example, relying on a single technique because strengths or benefits of various techniques may be leveraged; for example a first ML model, such as Bayesian neural networks, may offer a probabilistic framework to capture model uncertainty, which may be understood as accounting for epistemic uncertainty, while a second ML model, such as deep ensembles, may effectively model data uncertainty, which may be understood as accounting for aleatoric uncertainty.

The uncertainty parameter may be indicative of an uncertainty in prediction of the direction of arrival estimation and/or a measure of confidence of the direction of arrival estimation. Direction of arrival, or DOA, estimation may be understood as determining the direction that audio or sound signals arrive, such as audio signals from a participant (e.g., a person) speaking or otherwise making noise during a video conference. The first model output may comprise a direction of arrival estimation associated with an estimation of one or more participants of a video conference, such as an estimate of a presence of one or more participants of a video conference. For example, the processing of the audio data may comprise providing a first model output comprising one or more direction of arrival estimations associated with an estimation of one or more participants of a video conference, such as an estimate of a presence of one or more participants of a video conference. For example, the first model output may comprise a first direction of arrival associated with the presence of a first participant of a video conference, a second direction of arrival associated with the presence of a second participant of a video conference, and/or a third direction of arrival associated with the presence of a third participant of a video conference, etc. In other words, a direction of arrival estimation may also provide information on a number of participants of a video conference, locations of participants, identity of participants, and/or tracking of participants. In one or more example video conference devices, the first model output, such as the estimation of one or more participants, may provide an estimation of whether audio emitted from a certain direction originates from a participant of the video conference or originates from another source, such as noise external from the video conference, i.e., not being estimated as a participant.

In some examples, a direction of arrival estimation may be associated with a plurality of participants. For example, when two or more participants are located in substantially the same line of sight from the video conference device. In one or more examples, an ML model, such as the first model, has one or more nodes configured to be deactivated for performing deactivation of one or more nodes when processing the audio data for provision of the direction of arrival estimation.

The first neural network may be configured to output the uncertainty parameter based on a loss function incorporating a variance of the direction of arrival estimation. Such a configuration may be understood as enabling the first neural network to account for observation noise and input-dependent variability during training and inference, for example. A neural network, such as the first neural network, can be trained to directly output the uncertainty (e.g., the uncertainty parameter) by using a loss function that incorporates the variance of the DOA estimate, such as a negative log-likelihood, in the case of probabilistic regression tasks, for example. Such a loss function may be understood to be effective (for example, more effective than other techniques) in scenarios where noise levels vary across inputs because it may allow the first neural network to assign higher uncertainty to noisier observations while maintaining confidence in cleaner (for example, relatively less noisy) ones. For the loss function, or another function used to determine or select the uncertainty parameter may be based on or related to heteroscedastic regression, which may include modelling input-dependent variances to capture varying levels of observation noise.

**In** one or more examples, the first neural network is configured to perform an uncertainty prediction, such as heteroscedastic regression and/or other uncertainty estimation, by outputting the estimated direction of arrival and an associated variance parameter and/or utilize a loss function based on observation noise in the direction of arrival estimation. The variance parameter may, for example, represent the predicted uncertainty of the DOA estimate for a given input, which may allow the first neural network to adapt dynamically to varying levels of observation noise. In one or more examples, the training process can incorporate regularization techniques, such as variance smoothing or clipping, to stabilize the learning of uncertainty parameters, which may prevent overestimation and/or underestimation of uncertainty.

For example, a video conference system, such as a video conference device or a processor of such a device or a neural network of such a device, may utilize the loss function based on the observation noise in the direction of arrival comprises to account for varying observation noise in the direction of arrival.

**In** one or more examples, one or more processors of a video conference system, such as a processor or processors of a device within the system are configured to determine whether the uncertainty parameter satisfies a first criterion, such as a criterion associated with a confidence level of the DOA estimation. **In** accordance with the uncertainty parameter satisfying the first criterion, the one or more processors may process the camera data according to a first processing scheme for provision of the video output. The first processing scheme may be a first camera processing scheme, such as a first framing scheme. For example, the camera data may be processed based on framing (e.g., image capture settings) associated with one or more cameras. **In** other words, a processing scheme as disclosed herein, may be seen as a scheme for processing the camera data in a certain manner. For example, a processing scheme may comprise framing settings, zoom settings, and/or window settings. Framing settings may comprise settings determining how many frames the camera data should be split into, e.g., depending on the number of participants, such as active participants. In other words, a processing scheme may ensure that the camera data is processed such that each participant has a separate frame. Thereby, the camera data may be processed such that each participant is divided in a separate frame in the video output. Zoom settings may comprise settings for determining a zooming, such as digital zooming, of the camera data. For example, if different participants are located at different distances from the video conference device, different zoom settings may be applied for different participants and therefore for different frames. This may allow to have all participants appearing substantially with the same size on the video output. Window settings may comprise settings configuring how the camera data can be processed into different windows, e.g., a different window for each participant or each group of participants.

The one or more processors may be configured to process the camera data according to a second processing scheme for provision of the video output when, for example, the uncertainty parameter does not satisfy the first criterion and/or in accordance with the uncertainty parameter satisfying a second criterion. A second processing scheme may be understood as a different setting or setting for a camera, framing, and/or image capture settings relative to the first processing scheme.

The one or more processors may be configured to, in accordance with the uncertainty parameter not satisfying the first criterion and/or in accordance with the uncertainty parameter not satisfying the second criterion, process the camera data according to a third processing scheme for provision of the video output. A third processing scheme may be understood as a different setting or setting for a camera, framing, and/or image capture settings relative to the first processing scheme and/or second processing scheme.

A video conferencing system, such as a device within the system, which may be or include a processor of such a device, may thus control the processing of the camera data for provision of the video output based on the uncertainty parameter.

In one or more examples, the processing of the camera data comprises identifying one or more frames of one or more active participants of a video conference based on the direction of arrival estimation and the uncertainty parameter.

In one or more examples, to control the processing of the camera data comprises to adjust a camera framing based on the uncertainty parameter and the direction of arrival estimation.

In one or more examples, the system, such as the device or one or more processors or such a device, is configured to control one or more cameras based on the uncertainty parameter and the direction of arrival estimation.

In one or more examples, a video conference device is provided, the video conference device comprising a memory, an interface, and/or one or more processors, the one or more processors comprising a first neural network configured to operate according to a first machine learning (ML) model. The one or more processors are configured to obtain audio data; process, for example, using the using the first neural network, the audio data for provision of a first model output, for example, comprising a direction of arrival estimation; obtain camera data; process the camera data for provision of a video output; determine an uncertainty parameter, for example, based on the first model output; and control the processing of the camera data for provision of the video output, for example, based on the uncertainty parameter.

The following refers to figures, which are schematic and simplified for clarity, and they merely show details which aid understanding the disclosure, while other details have been left out. Throughout, the same reference numerals are used for identical or corresponding parts.

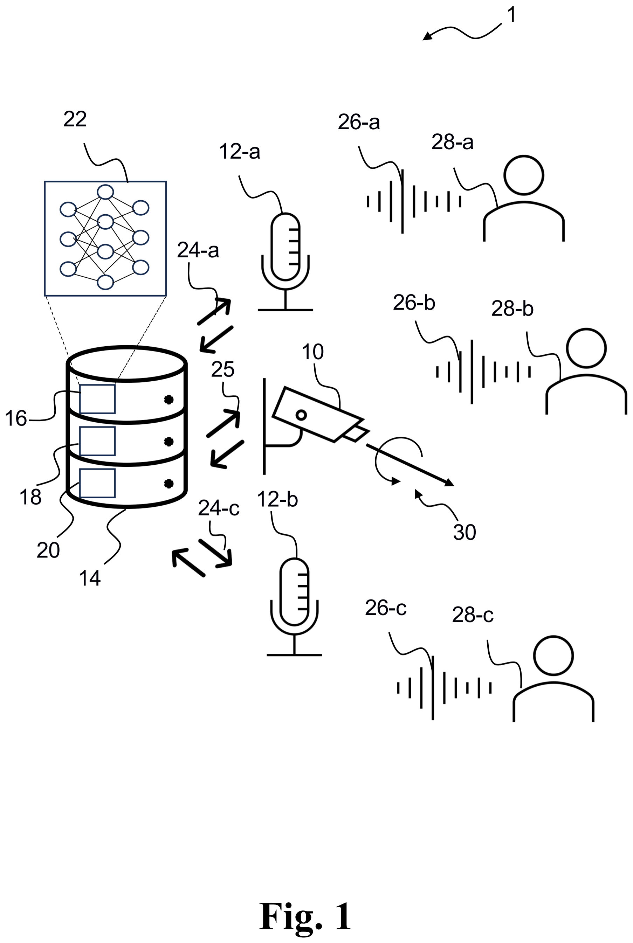

Fig. 1 is a diagram illustrating an example video conference system 1 according to this disclosure. Video conference system 1 comprises a camera 10, a plurality of microphones (mics) 12, a memory 18, an interface 20, and one or more processors 16. The server 14, camera 10, and/or microphones 12 are examples of video conference devices. Server 14 may be a physical or virtual computer or machine. Server 14 may be a mobile computing device, such as a mobile phone or tablet. Server 14 may be a control unit or console for system 14. In some examples, server 14 is integrated with a display unit (such as a television). Additionally or alternatively, server 14 may be an element or aspect of camera 10. Camera 10 may be a stand-alone camera, which may be optimized for video conferencing. Or camera 10 may be an element of another device, such as a computer (e.g., a laptop computer) or a mobile device, such as a tablet or a mobile phone. Camera 10 may include optics adjustable to control framing. Camera 10 may include an image sensor, image processor, and/or user interfaces. Microphones 12 may likewise be stand-alone devices, which may be optimized for video conferencing. Or microphones 12 may be an element or elements of another device, such as a computer (e.g., a laptop computer) or a mobile device, such as a tablet or a mobile phone. Although depicted as elements of server 14, processor(s) 16, memory 18, and/or interface 20 maybe components of camera 10 and/or microphones 12, in some examples.

In one or more examples, the processor(s) 16, memory 18, and interface 20 are components of a server 14 or other video conference device of the system 1. The one or more processors comprise a neural network, such as first neural network 22 configured to operate according to first a ML model. The one or more processors 16 are configured to obtain audio data 24, such as from the plurality microphones 12 via interface 20. The one or more processors 16 are configured to process, using the first neural network 22, the audio data 24 for provision of a first model output comprising a direction of arrival estimation, such as a direction of arrival estimation of audio/sound signals 26 from participants 28 of a video conference using system 1. The one or more processors are configured to obtain camera data 25, such as from camera 10 via interface 20. The one or more processors 16 are configured to process the camera data 25 for provision of a video output, such as via the first neural network 22. The one or more processors 16 are configured determine an uncertainty parameter based on the first model output. The one or more processors 16 are configured to control the processing of the camera data 25 for provision of the video output based on the uncertainty parameter.

In one or more examples, using the first neural network 22 comprises outputting the uncertainty parameter based on a loss function incorporating a variance of the direction of arrival estimation. In one or more examples, using the first neural network 22 comprises performing an uncertainty prediction (for example, heteroscedastic regression) by outputting the estimated direction of arrival and an associated variance parameter; and utilizing a loss function based on observation noise in the direction of arrival estimation. Utilizing the loss function based on the observation noise in the direction of arrival, in one or more examples, comprises accounting for varying observation noise in the direction of arrival.

In one or more examples, the first model output comprises a direction of arrival estimation associated with an estimation of one or more participants 28 of a video conference. In one or more examples, the first model has one or more nodes configured to be deactivated for performing deactivation of one or more nodes when processing the audio data for provision of the direction of arrival estimation.

In one or more examples, processing of the camera data 25 comprises identifying (such as with processor 16) one or more frames of one or more active participants 28 of a video conference based on the direction of arrival estimation (such as an estimation of a direction of arrival of audio/sound signals 26) and the uncertainty parameter. In one or more examples, controlling the processing of the camera data 25 comprises adjusting a camera framing 30 based on the uncertainty parameter and the direction of arrival estimation. Camera framing 30 may also be referred to as one or more frames. Adjusting camera framing 30 and/or identifying one or more frames may include or be based on changing a view or area captured by the camera 10. This may include zoom, pan, tilt, focus, or other similar electronic of physical manipulations of the image or images captured by camera 10.

In one or more examples, the uncertainty parameter is indicative of an uncertainty in prediction of the direction of arrival estimation and/or a measure of confidence of the direction of arrival estimation. In one or more examples, the one or more processors 16 are configured to control one or more cameras 10 based on the uncertainty parameter and the direction of arrival estimation.

The processor(s) 16 may take various actions or process data, such as camera data 25, based on the uncertainty parameter satisfying different criteria. In one or more examples, the processor(s) 16 may determine whether the uncertainty parameter satisfies a first criterion, and in accordance with the uncertainty parameter satisfying the first criterion, process the camera data 25 according to a first processing scheme for provision of the video output, which may be to a display or to a network. In one or more examples, in accordance with the uncertainty parameter not satisfying the first criterion and/or in accordance with the uncertainty parameter satisfying a second criterion, the processor(s) 16 process the camera data 25 according to a second processing scheme for provision of the video output, such as to a display or network. In one or more examples, in accordance with the uncertainty parameter not satisfying the first criterion and in accordance with the uncertainty parameter not satisfying the second criterion, the processor(s) 16 process the camera data 25 according to a third processing scheme for provision of the video output, such as to a display or network.

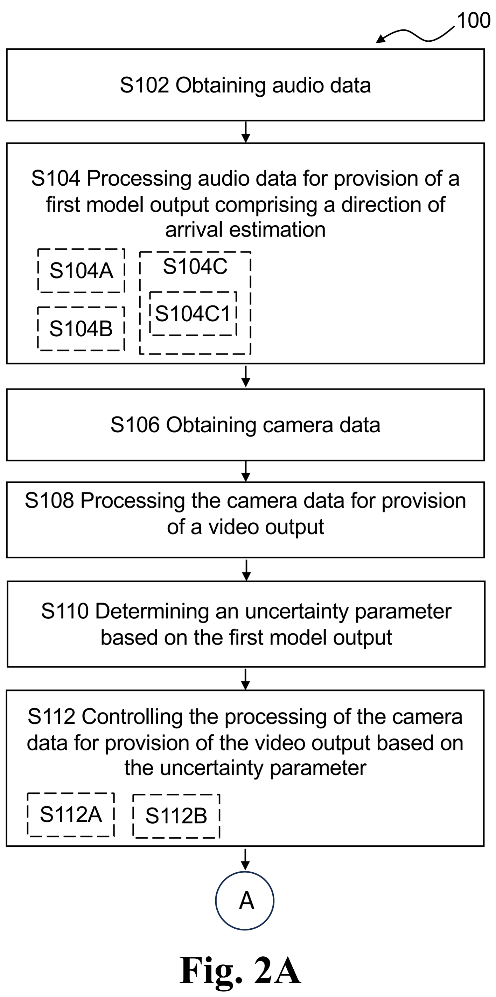

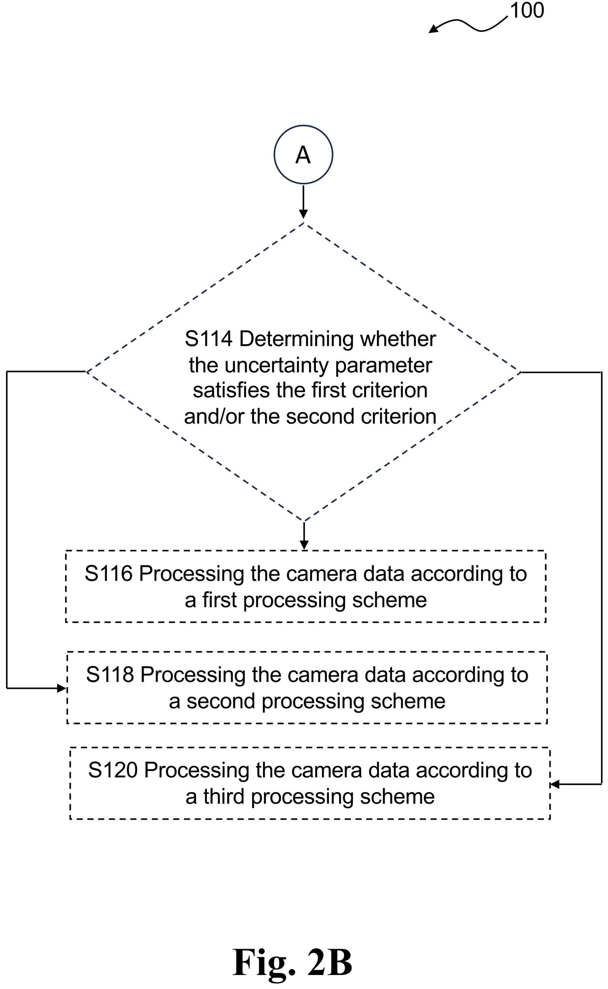

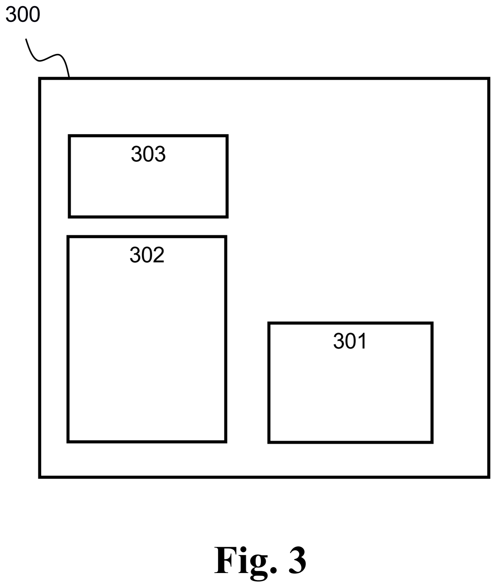

Fig. 2 is a flow-chart illustrating an example method, performed in an example video conference system and/or device according to this disclosure. The video conference device may be a video conferencing system, such as system 1 described with reference to Fig. 1 or a video conferencing device, such as device 300 described with reference to Fig. 3. The video conferencing system and/or device may comprise a memory, such as memory 18 of Fig. 1 and/or memory circuitry 301 of Fig. 3, an interface, such as interface 20 of Fig. 1 and/or interface 303 of Fig. 3, and/or one or more processors, such as processor(s) 16 of Fig. 1 and/or processor circuitry 302 of Fig. 3. The one or more processors, in one more examples, comprises a neural network or networks, such as a first neural network configured to operate according to first a ML. The method 100 comprises, at S102, obtaining audio data, such as audio data 24 described with reference to Fig. 1.

The method 100 comprises, at S104, processing (e.g., with the one or more processors), using the first neural network, such as neural network 22 of Fig. 1, the audio data for provision of a first model output comprising a direction of arrival estimation. In one or more examples, the first model output comprises a direction of arrival (such as a direction of arrival of audio/sound signals 26 of Fig. 1) estimation associated with an estimation of one or more participants (such as participants 28 of Fig. 1) of a video conference. In one or more examples, using the first neural network comprises outputting S104A an uncertainty parameter based on a loss function incorporating a variance of the direction of arrival estimation. In one or more examples, using the first neural network comprises performing S104B an uncertainty prediction, such as heteroscedastic regression and/or other uncertainty estimation, by outputting the estimated direction of arrival and an associated variance parameter and utilizing S104C a loss function based on observation noise in the direction of arrival estimation. In one or more examples, utilizing the loss function based on the observation noise in the direction of arrival comprises accounting for S104C1 varying observation noise in the direction of arrival. In one or more examples, the first model has one or more nodes configured to be deactivated for performing deactivation of one or more nodes when processing the audio data for provision of the direction of arrival estimation.

The method 100 comprises, at S106, obtaining camera data, such as camera data 25 of Fig. 1.

The method 100 comprises, at S108, processing the camera data for provision of a video output.

The method 100 comprises, at S110, determining an uncertainty parameter based on the first model output. In one or more examples, the uncertainty parameter is indicative of an uncertainty in prediction of the direction of arrival estimation and/or a measure of confidence of the direction of arrival estimation. In one or more examples, the one or more processors are configured to control one or more cameras based on the uncertainty parameter and the direction of arrival estimation.

The method 100 comprises, at S112, controlling the processing of the camera data for provision of the video output based on the uncertainty parameter. The processing of the camera data comprises, in one or more examples, comprises identifying S112A one or more frames of one or more active participants of a video conference based on the direction of arrival estimation and the uncertainty parameter. In one or more examples of the method, the processing of the camera data comprises adjusting S112B a camera framing based on the uncertainty parameter and the direction of arrival estimation.

In one or more examples, the method comprises determining S114 whether the uncertainty parameter satisfies a first criterion, and in accordance with the uncertainty parameter satisfying the first criterion, processing S116 the camera data according to a first processing scheme for provision of the video output.

In one or more examples, the method comprises, in accordance with the uncertainty parameter not satisfying the first criterion and/or in accordance with the uncertainty parameter satisfying a second criterion, processing S118 the camera data according to a second processing scheme for provision of the video output.

In one or more examples, the method comprises, in accordance with the uncertainty parameter not satisfying the first criterion and in accordance with the uncertainty parameter not satisfying the second criterion, processing S120 the camera data according to a third processing scheme for provision of the video output.

Fig. 3 is a block diagram illustrating an example video conference device 300 according to this disclosure. The video conference device 300 comprises memory circuitry 301, processor circuitry 302, and an interface 303. The video conference device 300 may be a camera, such as camera 10 of Fig. 1, a microphone, such as microphone 12 of Fig. 1, or a server, such as server 14 of Fig. 1, in one or more examples. In other words, the video conference device 300 may be a separate electronic device or it may be a component of, for example, system 1 of Fig. 1, and may perform various other functions, such as those associated with a video camera, a microphone, or other video conference equipment.

The memory circuitry 301 may be an example of a memory 18 of Fig. 1. The processor circuitry 302 may be an example of processor 16 of Fig. 1. The interface 303 may be an example of interface 20 of Fig. 1. The interface 303 is configured, in one or more examples, to receive signals from and/or transmit signals to one or more cameras (such as camera 10 of Fig. 1) and/or one or more microphones (such as microphone(s) 12 of Fig. 1).

Processor circuitry 302 and/or memory circuitry 301 comprise a neural network, such as first neural network configured to operate according to first a ML model. In one or more examples, the processor circuity 302 executes code or instructions read from memory circuitry 301 and thus comprises the first neural network. The first neural network may be the neural network 22 of Fig. 1.

The video conference device 300 may be configured to perform any of the methods disclosed herein, such as the methods described with reference to Fig. 2. In other words, the video conference device 300 may be configured to estimate direction of arrival of communication signals using uncertainty quantification.

The video conference device 300 is configured to obtain (such as via interface 303) audio data, such as audio data 24 of Fig. 1.

The video conference device 300 is configured to process (such as with processor circuitry 302), using the first neural network, the audio data for provision of a first model output comprising a direction of arrival estimation, such as direction of arrival estimation of audio/sound signal 24 of Fig. 1.

The video conference device 300 is configured to obtain (such as via interface 303) camera data, such as camera data 25 of Fig. 1.

The video conference device 300 is configured to process (such as with processor circuitry 302) the camera data for provision of a video output.

The video conference device 300 is configured to determine (such as with processor circuitry 302) an uncertainty parameter based on the first model output. In one or more examples, the first model output comprises a direction of arrival estimation (such as direction of arrival estimate of audio/sound signal 26 of Fig. 1) associated with an estimation of one or more participants (such as participants 28 of Fig. 1) of a video conference.

In one or more examples, the first neural network is configured to output the uncertainty parameter based on a loss function incorporating a variance of the direction of arrival estimation. In one or more examples, the first neural network is configured to perform an uncertainty prediction, such as heteroscedastic regression, by outputting the estimated direction of arrival and an associated variance parameter, and/or utilize a loss function based on observation noise in the direction of arrival estimation. In one or more examples, the uncertainty prediction comprises heteroscedastic regression. In one or more examples, to utilize the loss function based on the observation noise in the direction of arrival comprises to account for varying observation noise in the direction of arrival. In one or more examples, the first model has one or more nodes configured to be deactivated for performing deactivation of one or more nodes when processing the audio data for provision of the direction of arrival estimation.

The video conference device 300 is configured to control (such as with processor circuitry 302) the processing of the camera data for provision of the video output based on the uncertainty parameter. In one or more examples, to control processing of the camera data comprises to identify one or more frames of one or more active participants (such as participants 28 of Fig. 1) of a video conference based on the direction of arrival estimation (such as direction of arrival estimate of audio/sound signal 26 of Fig. 1) and the uncertainty parameter. In one or more examples, to control the processing of the camera data comprises adjusting a camera framing (such as framing based on position 30 of camera 10 of Fig. 1) based on the uncertainty parameter and the direction of arrival estimation. In one or more examples, the uncertainty parameter is indicative of an uncertainty in prediction of the direction of arrival estimation and/or a measure of confidence of the direction of arrival estimation.

In one or more examples, the video conference device 300 is configured to control (such as with processor circuitry 302) one or more cameras based on the uncertainty parameter and the direction of arrival estimation.

In one or more examples, the video conference device 300 is configured to (such as with processor circuitry 302) determine whether the uncertainty parameter satisfies a first criterion, e.g. if the uncertainty parameter is within or outside a range, if the uncertainty parameter is less than or equal to a threshold, or if the uncertainty parameter is larger than or equal to a threshold , and in accordance with the uncertainty parameter satisfying the first criterion, process the camera data according to a first processing scheme for provision of the video output.

In one or more examples, the video conference device 300 is configured to (such as with processor circuitry 302), in accordance with the uncertainty parameter not satisfying the first criterion and/or in accordance with the uncertainty parameter satisfying a second criterion, process the camera data according to a second processing scheme for provision of the video output.

In one or more examples, the video conference device 300 is configured to (such as with processor circuitry 302), in accordance with the uncertainty parameter not satisfying the first criterion and in accordance with the uncertainty parameter not satisfying the second criterion, process the camera data according to a third processing scheme for provision of the video output.

The operations and/or configurations of the video conference device 300 may be embodied in the form of executable logic routines (for example, lines of code, software programs, etc.) that are stored on a non-transitory computer readable medium (for example, memory circuitry 301) and are executed by processor circuitry 302).

Furthermore, the operations of the device 300 may be considered a method that the electronic device 300 is configured to carry out. Also, while the described functions and operations may be implemented in software, such functionality may additionally or alternatively be carried out via dedicated hardware or firmware, or some combination of hardware, firmware and/or software.

Memory circuitry 301 may be one or more of a buffer, a flash memory, a hard drive, a removable media, a volatile memory, a non-volatile memory, a random access memory (RAM), or other suitable device. In a typical arrangement, memory circuitry 301 may include a non-volatile memory for long term data storage and a volatile memory that functions as system memory for processor circuitry 302. Memory circuitry 301 may exchange data with processor circuitry 302 over a data bus. Control lines and an address bus between memory circuitry 301 and processor circuitry 302 also may be present (not shown in Fig. 3). Memory circuitry 301 is considered a non-transitory computer readable medium.

Memory circuitry 301 may be configured to store information (such as information indicative of second set of paging resources) in a part of the memory.

Processor circuitry 302 may be or may include one or more integrated circuits. Processor circuitry 302 may be or include at least one of a CPU, GPU, GPGPU, ASIC, FPGA, or any combination thereof.

The interface 303 may be or may include hardware, software, and/or firmware for such communication. The interface 303 may be or may include an audio codec or a video codec, or both.

Embodiments of methods and products according to the disclosure are set out in the following items:
Item 1. A video conference device comprising a memory, an interface, and one or more processors, the one or more processors comprising a first neural network configured to operate according to first a machine learning, ML, model, wherein the one or more processors are configured to: obtain audio data; process, using the first neural network, the audio data for provision of a first model output comprising a direction of arrival estimation; obtain camera data; process the camera data for provision of a video output; determine an uncertainty parameter based on the first model output; and/or control the processing of the camera data for provision of the video output based on the uncertainty parameter.
Item 2. The video conference device according to item 1, wherein the processing of the camera data comprises identifying one or more frames of one or more active participants of a video conference based on the direction of arrival estimation and the uncertainty parameter.
Item 3. The video conference device according to any of items 1-2, wherein to control the processing of the camera data comprises to adjust a camera framing based on the uncertainty parameter and the direction of arrival estimation.
Item 4. The video conference device according to any of items 1-3, wherein the uncertainty parameter is indicative of an uncertainty in prediction of the direction of arrival estimation and/or a measure of confidence of the direction of arrival estimation.
Item 5. The video conference device according to any of items 1-4, wherein the first model output comprises a direction of arrival estimation associated with an estimation of one or more participants of a video conference.
Item 6. The video conference device according to any of items 1-5, wherein the one or more processors are configured to control one or more cameras based on the uncertainty parameter and the direction of arrival estimation.
Item 7. The video conference device according to any of items 1-6, wherein the one or more processors are configured to: determine whether the uncertainty parameter satisfies a first criterion, and in accordance with the uncertainty parameter satisfying the first criterion, process the camera data according to a first processing scheme for provision of the video output.
Item 8. The video conference device according to item 7, wherein the one or more processors are configured to: in accordance with the uncertainty parameter not satisfying the first criterion and/or in accordance with the uncertainty parameter satisfying a second criterion, process the camera data according to a second processing scheme for provision of the video output.
Item 9. The video conference device according to item 8, wherein the one or more processors are configured to: in accordance with the uncertainty parameter not satisfying the first criterion and in accordance with the uncertainty parameter not satisfying the second criterion, process the camera data according to a third processing scheme for provision of the video output.
Item 10. The video conference device according to any of items 1-9, wherein the first neural network is configured to output the uncertainty parameter based on a loss function incorporating a variance of the direction of arrival estimation.
Item 11. The video conference device according to any of items 1-10, wherein the first neural network is configured to: perform an uncertainty prediction, such as heteroscedastic regression, by outputting the estimated direction of arrival and an associated variance parameter; and/or utilize a loss function based on observation noise in the direction of arrival estimation.
Item 12. The video conference device according to item 11, wherein to utilize the loss function based on the observation noise in the direction of arrival comprises to account for varying observation noise in the direction of arrival.
Item 13. The video conference device according to any of items 1-12, wherein the first model has one or more nodes configured to be deactivated for performing deactivation of one or more nodes when processing the audio data for provision of the direction of arrival estimation.
Item 14. A video conference system comprising a camera, a plurality of microphones, a memory, an interface, and one or more processors, the one or more processors comprising a first neural network configured to operate according to first a machine learning, ML, model, wherein the one or more processors are configured to: obtain audio data; process, using the first neural network, the audio data for provision of a first model output comprising a direction of arrival estimation; obtain camera data; process the camera data for provision of a video output; determine an uncertainty parameter based on the first model output; and/or control the processing of the camera data for provision of the video output based on the uncertainty parameter.
Item 15. Method of operating a video conference device comprising a memory, an interface, and one or more processors, the one or more processors comprising a first neural network configured to operate according to first a machine learning, ML, model, the method comprising: obtaining audio data; processing, using the first neural network, the audio data for provision of a first model output comprising a direction of arrival estimation; obtaining camera data; processing the camera data for provision of a video output; determining an uncertainty parameter based on the first model output; and/or controlling the processing of the camera data for provision of the video output based on the uncertainty parameter.
Item 16. The method according to item 15, wherein the processing of the camera data comprises identifying one or more frames of one or more active participants of a video conference based on the direction of arrival estimation and the uncertainty parameter.
Item 17. The method according to any of items 15-16, wherein to controlling the processing of the camera data comprises adjusting a camera framing based on the uncertainty parameter and the direction of arrival estimation.
Item 18. The method according to any of items 15-17, wherein the uncertainty parameter is indicative of an uncertainty in prediction of the direction of arrival estimation and/or a measure of confidence of the direction of arrival estimation.
Item 19. The method according to any of items 15-18, wherein the first model output comprises a direction of arrival estimation associated with an estimation of one or more participants of a video conference.
Item 20. The method according to any of items 15-19, wherein the one or more processors are configured to control one or more cameras based on the uncertainty parameter and the direction of arrival estimation.
Item 21. The method according to any of items 15-20, the method comprising: determining whether the uncertainty parameter satisfies a first criterion, and in accordance with the uncertainty parameter satisfying the first criterion, processing the camera data according to a first processing scheme for provision of the video output.
Item 22. The method according to item 21, wherein in accordance with the uncertainty parameter not satisfying the first criterion and/or in accordance with the uncertainty parameter satisfying a second criterion, processing the camera data according to a second processing scheme for provision of the video output.
Item 23. The method according to item 22, wherein in accordance with the uncertainty parameter not satisfying the first criterion and in accordance with the uncertainty parameter not satisfying the second criterion, processing the camera data according to a third processing scheme for provision of the video output.
Item 24. The method according to any of items 15-23, wherein using the first neural network comprises outputting the uncertainty parameter based on a loss function incorporating a variance of the direction of arrival estimation.
Item 25. The method according to any of items 15-24, wherein using the first neural network comprises: performing an uncertainty prediction, such as heteroscedastic regression, by outputting the estimated direction of arrival and an associated variance parameter; and utilizing a loss function based on observation noise in the direction of arrival estimation.
Item 26. The method according to any one of items 15-25, wherein utilizing the loss function based on the observation noise in the direction of arrival comprises accounting for varying observation noise in the direction of arrival.
Item 27. The method according to any of items 15-26, wherein the first model has one or more nodes configured to be deactivated for performing deactivation of one or more nodes when processing the audio data for provision of the direction of arrival estimation.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering. Furthermore, the labelling of a first element does not imply the presence of a second element and vice versa.

It may be appreciated that the figures comprise some circuitries or operations which are illustrated with a solid line and some circuitries or operations which are illustrated with a dashed line. Circuitries or operations which are comprised in a solid line are circuitries or operations which are comprised in the broadest example embodiment. Circuitries or operations which are comprised in a dashed line are example embodiments which may be comprised in, or a part of, or are further circuitries or operations which may be taken in addition to circuitries or operations of the solid line example embodiments. It should be appreciated that these operations need not be performed in order presented. Furthermore, it should be appreciated that not all of the operations need to be performed. The example operations may be performed in any order and in any combination.

It is to be noted that the word "comprising" does not necessarily exclude the presence of other elements or steps than those listed.

It is to be noted that the words "a" or "an" preceding an element do not exclude the presence of a plurality of such elements.

It is to be noted that the term "indicative of" may be seen as "associated with", "related to", "descriptive of", "characterizing", and/or "defining". The terms "indicative of", "associated with", "related to", "descriptive of", "characterizing", and "defining" can be used interchangeably. The term "indicative of" can be seen as indicating a relation. For example, weight data indicative of weight may comprise one or more weight parameters.

It is to be noted that the word "based on" may be seen as "as a function of" and/or "derived from". The terms "based on" and "as a function of" can be used interchangeably. For example, a parameter determined "based on" a data set can be seen as a parameter determined "as a function of" the data set. In other words, the parameter may be an output of one or more functions with the data set as an input.

A function may be characterizing a relation between an input and an output, such as mathematical relation, a database relation, a hardware relation, logical relation, and/or other suitable relations.

It should further be noted that any reference signs do not limit the scope of the claims, that the example embodiments may be implemented at least in part by means of both hardware and software, and that several "means", "units" or "devices" may be represented by the same item of hardware.

The various example methods, devices, nodes and systems described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program circuitries may include routines, programs, objects, components, data structures, etc. that perform specified tasks or implement specific abstract data types. Computer-executable instructions, associated data structures, and program circuitries represent examples of program code for executing steps of the methods disclosed herein. The particular sequence of such executable instructions or associated data structures represents examples of corresponding acts for implementing the functions described in such steps or processes.

Although features have been shown and described, it will be understood that they are not intended to limit the claimed disclosure, and it will be made obvious to those skilled in the art that various changes and modifications may be made without departing from the scope of the claimed disclosure. The specification and drawings are, accordingly, to be regarded in an illustrative rather than restrictive sense. The claimed disclosure is intended to cover all alternatives, modifications, and equivalents.

## Claims

1. A video conference device comprising a memory, an interface, and one or more processors, the one or more processors comprising a first neural network configured to operate according to a first machine learning model, wherein the one or more processors are configured to:
obtain audio data;
process, using the first neural network, the audio data for provision of a first model output comprising a direction of arrival estimation;
obtain camera data;
process the camera data for provision of a video output;
determine an uncertainty parameter based on the first model output; and
control the processing of the camera data for provision of the video output based on the uncertainty parameter.

2. The video conference device according to claim 1, wherein the processing of the camera data comprises identifying one or more frames of one or more active participants of a video conference based on the direction of arrival estimation and the uncertainty parameter.

3. The video conference device according to any of the previous claims, wherein to control the processing of the camera data comprises to adjust a camera framing based on the uncertainty parameter and the direction of arrival estimation.

4. The video conference device according to any of the previous claims, wherein the uncertainty parameter is indicative of an uncertainty in prediction of the direction of arrival estimation and/or a measure of confidence of the direction of arrival estimation.

5. The video conference device according to any of the previous claims, wherein the first model output comprises a direction of arrival estimation associated with an estimation of a presence of one or more participants of a video conference.

6. The video conference device according to any of the previous claims, wherein the one or more processors are configured to control one or more cameras based on the uncertainty parameter and the direction of arrival estimation.

7. The video conference device according to any of the previous claims, wherein the one or more processors are configured to:
- determine whether the uncertainty parameter satisfies a first criterion, and in accordance with the uncertainty parameter satisfying the first criterion, process the camera data according to a first processing scheme for provision of the video output.

8. The video conference device according to claim 7, wherein the one or more processors are configured to: in accordance with the uncertainty parameter not satisfying the first criterion and/or in accordance with the uncertainty parameter satisfying a second criterion, process the camera data according to a second processing scheme for provision of the video output.

9. The video conference device according to claim 8, wherein the one or more processors are configured to: in accordance with the uncertainty parameter not satisfying the first criterion and in accordance with the uncertainty parameter not satisfying the second criterion, process the camera data according to a third processing scheme for provision of the video output.

10. The video conference device according to any of the previous claims, wherein the first neural network is configured to output the uncertainty parameter based on a loss function incorporating a variance of the direction of arrival estimation.

11. The video conference device according to any of the previous claims, wherein the first neural network is configured to:
- perform an uncertainty prediction by outputting the estimated direction of arrival and an associated variance parameter; and
- utilize a loss function based on observation noise in the direction of arrival estimation.

12. The video conference device according to claim 11, wherein to utilize the loss function based on the observation noise in the direction of arrival comprises to account for varying observation noise in the direction of arrival.

13. The video conference device according to any of the previous claims, wherein the first model has one or more nodes configured to be deactivated for performing deactivation of one or more nodes when processing the audio data for provision of the direction of arrival estimation.

14. A video conference system comprising a camera, a plurality of microphones, a memory, an interface, and one or more processors, the one or more processors comprising a first neural network configured to operate according to a first machine learning model, wherein the one or more processors are configured to:
obtain audio data;
process, using the first neural network, the audio data for provision of a first model output comprising a direction of arrival estimation;
obtain camera data;
process the camera data for provision of a video output;
determine an uncertainty parameter based on the first model output; and
control the processing of the camera data for provision of the video output based on the uncertainty parameter.

15. Method of operating a video conference device comprising a memory, an interface, and one or more processors, the one or more processors comprising a first neural network configured to operate according to a first machine learning model, the method comprising:
- obtaining audio data;
- processing, using the first neural network, the audio data for provision of a first model output comprising a direction of arrival estimation;
- obtaining camera data;
- processing the camera data for provision of a video output;
- determining an uncertainty parameter based on the first model output; and
- controlling the processing of the camera data for provision of the video output based on the uncertainty parameter.
